# EUROPEAN PATENT SPECIFICATION

(11) **EP 3 264 727 B1**
(45) Date of publication and mention of the grant of the patent: **08.05.2024**
(21) Application number: 16305836.5
(22) Date of filing: 01.07.2016
(51) Int. Cl.: H04W 8/10, H04W 8/12, H04W 4/02

(54) **DATABASE, NETWORK ENTITY AND METHOD FOR THE SUPPORT OF USER LOCATION CHANGE REPORTING**
DATENBANK, NETZWERKEINHEIT UND VERFAHREN FÜR DIE UNTERSTÜTZUNG EINER BENUTZERPOSITIONSÄNDERUNGSMELDUNG
BASE DE DONNÉES, ENTITÉ DE RÉSEAU ET PROCÉDÉ POUR LE SUPPORT DE RAPPORT DE CHANGEMENT D'EMPLACEMENT D'UTILISATEUR

(43) Date of publication of application: 03.01.2018
(73) Proprietor: Nokia Solutions and Networks Oy, 02610 Espoo (FI)
(72) Inventor: LANDAIS, Bruno, 22304 Lannion (FR); THIEBAUT, Laurent, 91620 Nozay (FR)
(74) Representative: Script IP Limited

(56) References cited:
- EP-A1- 3 236 617
- WO-A1-2016/074700
- US-A1- 2009 259 992
- US-A1- 2014 011 514
- US-A1- 2015 171 661
- US-A1- 2016 020 920
- Dave Chappell ET AL: "Web Services Brokered Notification 1.3", OASIS Standard, 1 October 2006 (2006-10-01), XP055308260, Retrieved from the Internet: URL:http://docs.oasis-open.org/wsn/wsn-ws_ brokered_notification-1.3-spec-os.pdf [retrieved on 2016-10-06]
- VOLKER ZIEGLER ET AL: "Architecture Vision for the 5G Era: Cognitive and Cloud Network Evolution", 2015 IEEE 81ST VEHICULAR TECHNOLOGY CONFERENCE (VTC SPRING 2015) : GLASGOW, SCOTLAND, UNITED KINGDOM, 11 - 14 MAY 2015, 14 May 2015 (2015-05-14), pages 1-6, XP055307347, Piscataway, NJ DOI: 10.1109/VTCSpring.2015.7145709 ISBN: 978-1-4799-8088-8

## Description

The present invention generally relates to mobile communication networks and systems.

Descriptions of mobile networks and systems can be found in the literature, such as in particular in Technical Specifications published by standardization bodies such as for example 3GPP (3rd Generation Partnership Project).

In general, in a mobile system, a terminal (also called User Equipment UE) has access to mobile communication services via a mobile network (also called Public Land Mobile Network PLMN). In general, a mobile network comprises a Core Network (CN) accessed via a Radio Access Network (PAN).

Different mobile systems/networks of different generations have been standardized over time, such as EPC/EPS network for the 4G generation.

A new generation of mobile system/network, called 5G, is currently in the process of being standardized. In particular, 3GPP is currently standardizing the so-called Next Generation Core Network which will be the Core Network of future 5G networks (as opposed to Evolved Packet Core EPC which is the Core Network of legacy EPS networks).

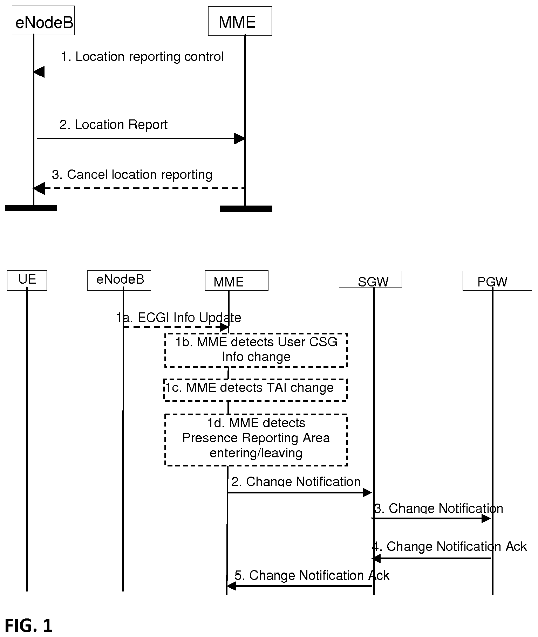

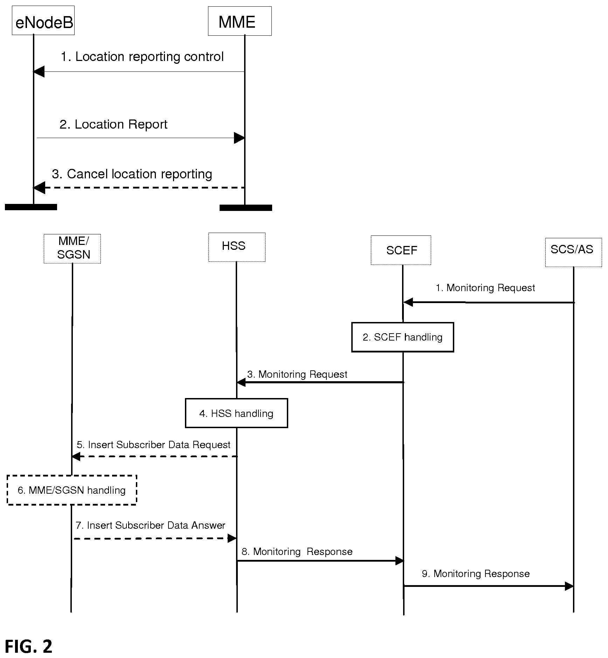

In legacy EPS networks, user location change reporting procedures have been defined, which may be used for different reasons (e.g. for policy control and/or charging reasons). Such procedures are specified in particular in 3GPP TS 23.401 and 3GPP TS 23.682, as recalled in figure 1 (ULI reporting to PGW/PCRF in Legacy EPC) and in figure 2 (ULI reporting to SCEF in Legacy EPC).

Document US 2014/011514 A1 provides technological background.

*In particular, document* US 2014/011514 A *discloses provision of a location information report via payload data traffic. More specifically, a method in a radio access network node for transmitting location information associated with a user equipment to a first core network node in a communications network is specified. The radio access network node transmits the location information to the first core network node using a General packet radio service Tunneling Protocol-User plane, GTP-U, protocol. The location information is enclosed in a GTP-U header of payload data traffic. The first core network node is a GGSN*/*SGW*/*PGW. The first core network node may provide the location information to an OCS*/*PCRF having asked for location reporting with respect to the user equipment.*

As recognized by the inventors and as will be explained later with more detail, such procedures as currently specified for legacy EPC generate a lot of signalling throughout the entire network and impact a lot of mobile network entities, beyond those "producing" or "consuming" the user
location, for activating location change reporting and for reporting user location changes; also, as specified e.g. in 3GPP TS 23.401, due to the increased signalling load, it is recommended that cell change reporting is only applied for a limited number of users. This puts undesirable constraints on how operators need to operate their network and services.

There is a need to design optimized signalling flows and to drastically reduce the network signalling and complexity, in particular for 5G networks.

As solution, the present invention provides an entity of a mobile network according to claim 1 and a corresponding method for support of user location change reporting per claim 4. Dependent claims provide preferred embodiments of the invention.

Some embodiments of apparatus and/or methods in accordance with embodiments of the present invention are now described, by way of example only, and with reference to the accompanying drawings, in which:
- Figure 1 is intended to recall ULI reporting to PGW/PCRF in Legacy EPC,
- Figure 2 is intended to recall ULI reporting to SCEF in Legacy EPC,
- Figure 3 is intended to illustrate, in a simplified way, an example of a data centric architecture, with a Shared Data Layer SDL, for support of User Location Change Reporting, according to embodiments of the invention,
- Figure 4 is intended to illustrate, in a simplified way, a first example of signaling flow for support of User Location Change Reporting, according to embodiments of the invention,
- Figure 5 is intended to illustrate, in a simplified way, a second example of signaling flow for support of User Location Change Reporting, according to embodiments of the invention.

### Abbreviations

- API: Application programming Interface
- CCF: Core Control Function (e.g. 5G Core Control function supporting mobility management)
- CN: Core Network
- DB: Database
- EPC: Evolved Packet Core
- EPS: Evolved Packet System
- FE: Front End
- HPLMN: Home PLMN
- HSS: Home Subscriber Server
- ISD: Insert Subscriber Data
- MME: Mobility Management Entity
- SCEF: Service Capability Exposure Function
- SCS/AS: Service Capability Server/Application Server
- SDL: Shared Data Layer
- SGW: Serving Gateway
- PCC: Policy and Charging Control
- PCRF: Policy and Charging Rules Function
- PDN: Packet Data Network
- PGW: PDN Gateway
- PLMN: Public Land Mobile Network
- RAN: Radio Access Network
- UE: User Equipment
- ULI: User Location Information
- VNF: Virtualized Network Function
- VPLMN: Visited PLMN

### Description of various aspects and/or embodiments of the invention

Existing PLMNs (legacy EPC) are designed as a messaging-based architecture, i.e. without data sharing across network entities, and thus with extensive signalling across all network entities, in particular to activate detection and reporting of user location changes. As a consequence, this also restricts operators to apply location reporting with a fine granularity (e.g. cell) only for a limited number of users. The existing procedures also impact a lot of network entities beyond those "producing" or "consuming" the user location (e.g. SGW, MME) for activating location change reporting and for reporting user location changes, as can be seen for example from figure 1 (ULI reporting to PGW/PCRF in Legacy EPC) or figure 2 (ULI reporting to SCEF in Legacy EPC).

It is desirable to move away from the legacy messaging-based design, towards a cloud optimized network architecture, to reduce the network signalling and complexity.

3GPP is currently standardizing the so called Next Generation Core Network which will be the core network for 5G networks. SA2 is documenting the results in TR 23.799, which provides the opportunity to move towards a data centric architecture with optimized network signalling flows.

The term "user location change" is used in a broad sense, encompassing changes of e.g. cell, eNodeB, tracking area, presence reporting area, user CSG information (e.g. UE within its home femto), serving network or time zone.

Embodiments of the invention use a data centric architecture, whereby all data (subscriber, session, mobility, policy, operations data) in the 5G core networks is stored in data plane - the so called Shared Data Layer (SDL). The SDL enables a flexible cloud-optimized network design with simplified stateless VNFs, accessing the Shared Data Layer for reading, updating, deleting data or for being notified about data changes. The SDL provides a Data centric network architecture, which allows to design optimized signalling flows and to drastically reduce the network signalling and complexity for activating and reporting user location changes.

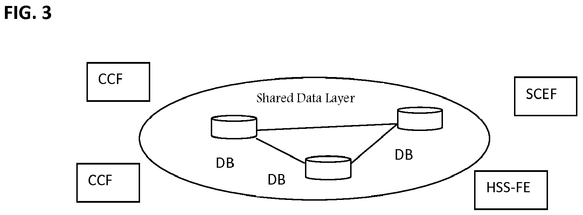

Figure 3 illustrates in a simplified way an example of Data centric network architecture, with a Shared Data Layer SDL.

In some embodiments:
The Shared Data Layer provides a Data centric network architecture, whereby the data (user subscription, session data, etc) can be shared by network entities, e.g. between Core Control Function (CCF) entities and other entities such as the HSS (or any subscription repository database), SCEF(or any entity exposing network capability to external applications), PCRF (or any Policy Control Function, any entity needing User location Information for charging purpose), and Simplified Stateless VNFs.

An entity such as CCF will also be called serving CN entity (CN entity capable of serving a UE). In other embodiments, the network entities may also include entities that will be called serving RAN entity (RAN entity capable of serving a UE). An entity such as SCEF or PCRF will also be called application entity (entity which may require user location information, either for its own needs (e.g. for charging purpose) or for the need of external application(s)).

This allows to design optimized signalling flows and to drastically reduce the network signalling and complexity, to activate user location change reporting and to report user location changes. This enables in particular to remove all the signalling between the network entities (e.g. MME, SGW, PGW, PCRF, SCEF) which exist in the legacy EPC.

The Shared Data Layer SDL can be regarded as a database allowing data storage and access to the stored data by the network entities sharing the SDL, e.g. to create, read, update, ... data as well as use a subscription/notification mechanism. The database (DB) may be distributed over different locations as illustrated in the example of Figure 3.

Some embodiments relate to a SDL between RAN, CCF and other Entities interested in the user location such as SCEF (or any entity exposing network capability to external applications), PCRF (or any Policy Control Function), Charging entities,....

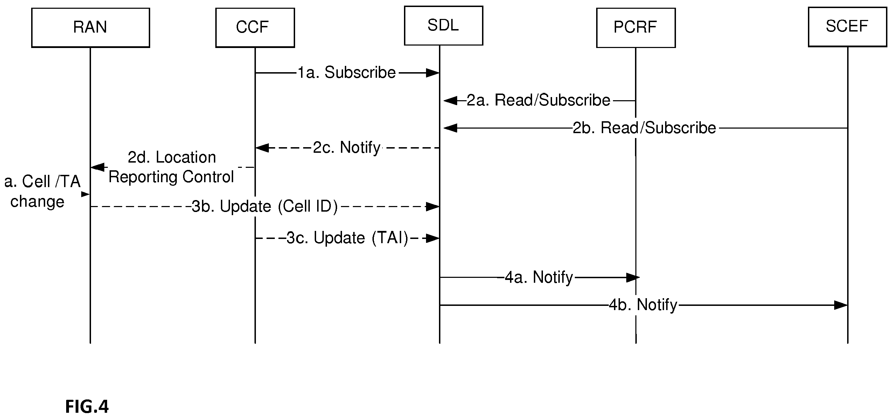

Figure 4 is intended to illustrate, in a simplified way, a first example of signaling flow for support of User Location Change Reporting, according to embodiments of the invention.

In this example call flow, the entities interested in the user location have access to the SDL of the visited PLMN.

In some embodiments, part or all of following example steps may be provided, as illustrated in figure 4:
1. The CCF may subscribe to be notified when an application Entity (e.g. PCRF, SCEF) subscribes to User Location Information (ULI) changes (e.g. when an application Entity activates ULI reporting at cell level).
2a/2b. An application Entity (e.g. PCRF, SCEF) reads the current user location from the SDL and/or subscribes to be notified about user location change.
   The subscription may be associated with conditions such as subscription during a time window, subscription for a limited number of notification, etc... A read may be considered as a one time subscription
   The subscription may be associated with security information allowing the application Entity to trust the notification sent by the SDL (so that the application Entity may check that a notification it receives corresponds to the subscription)
2c. (based on the subscription at step 1) The SDL notifies the CCF when ULI changes need to be reported for an UE.
2d. When ULI changes need to be reported at cell level for an UE, the CCF requests the RAN to update the SDL upon UE's cell change or to notify the CCF of the UE cell change. The choice between a request for SDL update and request for notification may e.g. be based on capability exchange done between CCF and RAN or based on local CCF configuration (e.g. related with RAN sharing)
3a/3b. When it has been requested to do so by the CCF, the RAN updates the cell ID in the SDL upon detecting a change of user location. Alternatively, if the SDL is not shared with the RAN, the RAN notifies the CCF of the UE cell change and the CCF updates the SDL on behalf of the RAN.
3c. The CCF may update the SDL upon change of other user location information such as Tracking Area (or the equivalent 5G concept).
4. Entities having subscribed to user location changes get notified about the new user location.

Note: Steps 1a, 2c and 2d could possibly be replaced by the RAN being directly notified by the SDL when an application Entity subscribes to user location changes at cell level..

Benefits of User Location Change Reporting with a Data centric Network Architecture according to embodiments of the invention include:
- No signalling between all entities for reporting changes of user location. No or minimal signalling for activating ULI reporting.
- would allow to apply user location reporting at cell level for a larger number of subscribers
- does only impact the entities "producing" and "consuming" the user location (possible exception: CCF for activating ULI reporting at cell level)

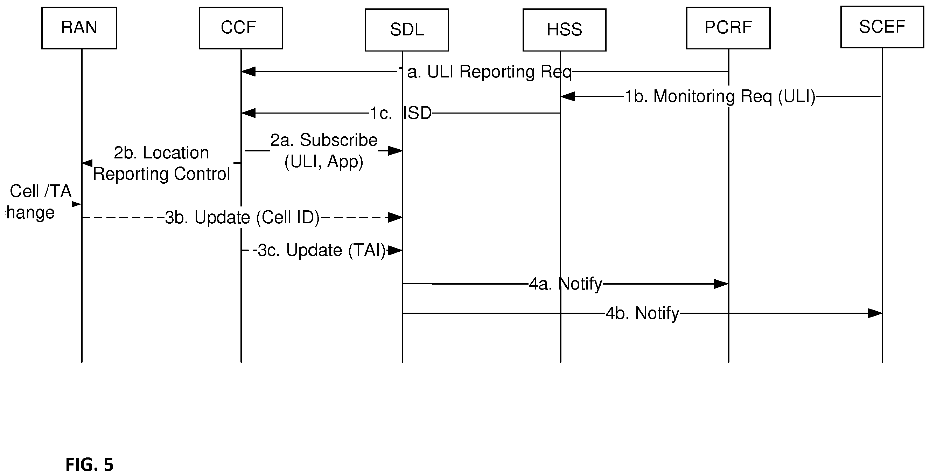

Figure 5 is intended to illustrate, in a simplified way, a second example of signaling flow for support of User Location Change Reporting, according to embodiments of the invention.

In this example call flow, the PCRF and SCEF may or may not access the SDL of the CCF/RAN, e.g. roaming scenario with PCRF/SCEF in the HPLMN.

In some embodiments, part or all of following example steps may be provided, as illustrated in figure 5:
1. An application Entity (e.g. PCRF, SCEF) requests to be notified about user location change, e.g. using similar signalling as in the legacy EPC, or subscribing to the user location in the HSS (or SDL in the HPLMN - not represented in the figure) which triggers an ISD towards the CCF of the visited PLMN.
2a/2b. The CCF subscribes the application Entity to be notified about user location change. If ULI changes need to be reported at cell level, the CCF also requests the RAN to update the SDL upon UE's cell change.
3a/3b. When it has been requested to do so by the CCF, the RAN updates the cell ID in the SDL upon detecting a change of user location. Alternatively, if the SDL is not shared with the RAN, the RAN notifies the CCF of the UE cell change and the CCF updates the SDL on behalf of the RAN.
3c. The CCF updates the SDL upon change of other user location information such as Tracking Area (or the equivalent 5G concept).
4. application Entities having subscribed to user location changes get notified about the new user location.

This call flows supports the possibility for an entity not pertaining to the visited PLMN to subscribe to and be notified about user location change in the visited PLMN, under the control of the visited PLMN, with a SDL/Data centric approach like for the non-roaming case.

Benefits of User Location Change Reporting with a Data centric Network Architecture according to embodiments oft he invention include:
- No signalling between all entities for reporting changes of user location.
- would allow to apply user location reporting at cell level for a larger number of subscribers
- does only impact the entities "producing" and "consuming" the user location

Note: Steps 1 and 2a could possibly be replaced by the PCRF/SCEF of the HPLMN directly subscribing to user location change in the SDL of the VPLMN, like in section 2.1. This would however require the PCRF/SCEF to determine first whether a SDL is deployed in the VPLMN, then to discover the SDL endpoints in the VPLMN supporting the notification service, and then to keep track of the VPLMN the user is roaming in to update the subscription if the UE reselects a different PLMN. So this approach is not deemed suitable in roaming scenarios. On the other hand, the Entity (e.g. SCEF) can subscribe to user location change to the SDL of the HPLMN, which triggers the HSS-FE to send an Insert Subscriber Data Request towards the visited CCF which then updates its own SDL (in the VPLMN) to subscribe the Entity, as shown in the figure 2. With this approach, when the user reselects a different PLMN, the HSS-FE re-downloads the subscription data (with the SCEF subscription to user location change) to the new visited CCF, i.e. the SCEF does not need to take core about the mobility of the UE.

Some embodiments relate to Data Sharing between the RAN and the CN.

Some embodiments also encompass the option to support Data sharing between the RAN and the CN.

In some embodiments, part or all of the following may be provided:
- Only a subset of data needs to be shared (for the scope of user location reporting)
- When RAN can access to SDL, Only the producer (RAN) and consumer (e.g. PCRF, SCEF) of the User Location are then involved during changes of user location. In that case, CCF is NO longer required to be involved in ULI activation/reporting.
- This May not always be possible e.g. when the CN and RAN operators are different (network sharing).
- If the RAN is not able to access the SDL, the CCF remains involved in the activation of user location change reporting and in the reporting of user location info change (e.g. CCF updating the user location info in the DB whenever being notified about a user location change by the RAN).

Various aspects and/or embodiments of the invention include (though not being limited to) following aspects and/or embodiments.

Some aspects are related to a database, referred to as Shared Data Layer SDL, of a mobile network.

Various embodiments are provided, including (though not being limited to) following embodiments, which may be taken alone or in combination, according to various combinations.

In an embodiment, said database is configured to:
- support data sharing between mobile network entities, said data including data related to user location change reporting, said mobile network entities including at least one entity, such as RAN entity or CN entity such as CCF, referred to as serving entity, and at least one entity needing User location Information, referred to as application entity, such as Policy controller referred to as PCRF or API exposure Function referred to as SCEF.

In an embodiment, said database is configured to perform at least one of:
- receive from a serving entity, a subscription request indicating that the serving entity subscribes to be notified if an application entity subscribes to be notified about user location changes,- receive from an application entity, a subscription request indicating that the application entity subscribes to be notified about user location changes,
- notify a serving entity, having subscribed to said notification, if an application entity subscribes to be notified about user location changes,
- receive from a serving entity, an update about user location,
- notify an application entity, having subscribed to said notification, about user location changes.

In an embodiment, said database is configured to perform at least one of:
- receive from a serving entity such as CCF, a subscription request on behalf of an application entity that desires to be notified about user location changes,
- receive from a serving entity an update about user location,
- notify an application entity, having been subscribed to said notification, about user location changes.

In an embodiment:
- said user location changes include cell changes.

Other aspects are related to an entity of a mobile network, such as PCRF or SCEF, referred to as application entity.

Various embodiments are provided, including (though not being limited to) following embodiments, which may be taken alone or in combination, according to various combinations.

In an embodiment, said application entity is configured to:
- support data sharing with at least one other mobile network entity, via a database referred to as Shared Data Layer SDL, said data including data related to user location change reporting, said at least one other mobile network entity including at least one entity, such as RAN entity or CN entity such as CCF , referred to as serving entity.

In an embodiment, said application entity is configured to perform at least one of:
- send to the SDL a subscription request indicating that the application entity subscribes to be notified about user location changes,
- receive from the SDL a notification about user location change.

In an embodiment:
- The said subscription to be notified about user location changes may be associated with security information allowing the application Entity to trust the notification sent by the SDL (so that the application Entity may check that a notification it receives corresponds to the subscription).

In an embodiment:
- The said subscription to be notified about user location changes may be associated with conditions such as subscription during a time window, subscription for a limited number of notification.

In an embodiment, said application entity is configured to perform at least one of:
- send a request such as ULI Reporting request towards a serving entity such as CCF , respectively send a request such as Monitoring Request (ULI) towards a mobile network entity such as HSS, said request indicating that the application entity is requesting user location change reporting,
- receive from the SDL a notification about user location changes.

In an embodiment:
- said user location changes include cell changes.

Other aspects are related to an entity of a mobile network, such as CCF , referred to as serving CN entity.

Various embodiments are provided, including (though not being limited to) following embodiments, which may be taken alone or in combination, according to various combinations.

In an embodiment, said serving CN entity is configured to:
- support data sharing with at least one other mobile network entity, via a database referred to as Shared Data Layer SDL, said data including data related to user location change reporting, said at least one other mobile network entity including at least one entity, such as PCRF or SCEF, referred to as application entity.

In an embodiment, said serving CN entity is configured to perform at least one of:
- send to the SDL a subscription request, indicating that the serving CN entity subscribes to be notified when an application entity subscribes to be notified about user location changes,
- receive from the SDL a notification when an application entity subscribes to be notified about user location changes,
- send to the SDL an update about user location.

In an embodiment, said serving CN entity is configured to perform at least one of:
- send to the SDL a subscription request indicating that the application entity subscribes to be notified about user location changes,
- send to the SDL an update about user location.

In an embodiment, said serving CN entity is configured to perform at least one of:
- send to a serving RAN entity a request to report updates about user location,
- send to the SDL an update about user location, upon reception of an update from a serving RAN entity.

In an embodiment, said serving CN entity is configured to perform at least one of:
- receive from a mobile network entity such as HSS, in a request such as Insert Subscriber Data request, subscription data indicating that an application entity desires to get subscribed to be notified about user location changes,
- send to the SDL a subscription request on behalf of an application entity that desires to be notified about user location changes.

In an embodiment:
- said user location changes include cell changes.

Other aspects are related to an entity of a mobile network, referred to as serving RAN entity.

Various embodiments are provided, including (though not being limited to) following embodiments, which may be taken alone or in combination, according to various combinations.

In an embodiment, said serving RAN entity is configured to:
- support data sharing with at least one other mobile network entity, via a database referred to as Shared Data Layer SDL, said data including data related to user location change reporting, said at least one other mobile network entity including at least one of: an entity such as CCF referred to as serving CN entity, and an entity such as PCRF or SCEF referred to as application entity.

In an embodiment, said serving RAN entity is configured to perform at least one of:
- send to the SDL a subscription request indicating that the serving RAN entity subscribes to be notified if the application entity subscribes to be notified about user location changes,
- receive from the SDL a notification if the application entity subscribes to be notified about user location changes,
- send to the SDL a notification about user location change.

In an embodiment, said serving RAN entity is configured to perform at least one of:
- receive from a serving CN entity such as CCF , a request to report about location changes,
- send to the SDL a notification about location change.

In an embodiment:
- said user location changes include cell changes.

Other aspects are related to an entity such as HSS of a mobile network.

Various embodiments are provided, including (though not being limited to) following embodiments, which may be taken alone or in combination, according to various combinations.

In an embodiment, said entity is configured to:
- support data sharing with at least one other mobile network entity, via a database referred to as Shared Data Layer SDL, said data including data related to user location change reporting, said at least one other mobile network entity including at least one of: a mobile network entity such as CCF referred to as serving CN entity, and a mobile network entity such as PCRF or SCEF referred to as application entity.

In an embodiment, said entity is configured to perform at least one of:
- receive from the SDL a notification indicating that the application entity subscribes to be notified about user location changes,
- send, in a request such as Insert Subscriber Data request towards the serving CN entity, subscription data indicating that the application entity subscribes to be notified about user location changes.

In an embodiment:
- said user location changes include cell changes.

Other aspects are related to method(s) for support of user location change reporting, comprising at least one step performed by at least one of the thus configured entities.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. An entity of a mobile network, implemented as a serving radio access network entity, configured to:
- support data sharing with at least one other mobile network entity, via a database referred to as shared data layer, said database referred to as shared data layer allowing data storage and access to the stored data by network entities sharing said shared data layer, said data including data related to user location change reporting, said at least one other mobile network entity including at least: an entity referred to as serving core network entity, such as core control function, and an entity referred to as application entity, such as policy controller or application programming interface exposure function,
**characterized in that** said entity of said mobile network is configured to
- receive, from the shared data layer, a notification that the application entity subscribes to be notified about user location changes, and to
- send to the shared data layer a notification about user location change.

2. An entity according to claim 1, configured to:
- send to the shared data layer a subscription request indicating that the serving radio access network entity subscribes to be notified if the application entity subscribes to be notified about user location changes.

3. An entity according to claim 1 or 2, wherein:
- said user location changes include cell changes.

4. A method for support of user location change reporting, comprising:
- supporting, by an entity of a mobile network, implemented as a serving radio access network entity, data sharing with at least one other mobile network entity, via a database referred to as shared data layer, said database referred to as shared data layer allowing data storage and access to the stored data by network entities sharing said shared data layer, said data including data related to user location change reporting, said at least one other mobile network entity including at least: an entity referred to as serving core network entity, such as core control function, and an entity referred to as application entity, such as policy controller or application programming interface exposure function,
**characterized in**
- receiving, by said serving radio access network entity, from the shared data layer, a notification that the application entity subscribes to be notified about user location changes, and
- sending, by said serving radio access network entity, to the shared data layer, a notification about user location change.

5. A method according to claim 4, comprising said serving radio access network entity:
- sending to the shared data layer a subscription request indicating that the serving radio access network entity subscribes to be notified if the application entity subscribes to be notified about user location changes.

6. A method according to claim 4 or 5, wherein:
- said user location changes include cell changes.

## Patentansprüche

1. Entität eines Mobilfunknetzwerks, die als eine bedienende Funkzugangsnetzwerkentität implementiert und zu Folgendem ausgelegt ist:
- Unterstützen der gemeinsamen Verwendung von Daten via eine Datenbank, die als eine Schicht gemeinsam verwendeter Daten bezeichnet wird, mit mindestens einer weiteren Mobilfunknetzwerkentität, wobei die Datenbank, die als eine Schicht gemeinsam verwendeter Daten bezeichnet wird, Datenspeicherung und Zugang zu den gespeicherten Daten durch Netzwerkentitäten erlaubt, die die Schicht gemeinsam verwendeter Daten gemeinsam verwenden, wobei die Daten Daten beinhalten, die eine Meldung einer Benutzerstandortänderung betreffen, wobei die mindestens eine andere Mobilfunknetzwerkentität mindestens Folgendes beinhaltet: eine Entität, die als eine bedienende Kernnetzwerkentität bezeichnet wird, wie etwa eine Kernsteuerfunktion, und eine Entität, die als eine Anwendungsentität bezeichnet wird, wie etwa eine Richtliniensteuerung oder eine Anwendungsprogrammierschnittstellenexpositionsfunktion,
**dadurch gekennzeichnet, dass** die Entität des Mobilfunknetzwerks zu Folgendem ausgelegt ist
- Empfangen einer Benachrichtigung von der Schicht gemeinsam verwendeter Daten, dass die Anwendungsentität eine Benachrichtigung über Benutzerstandortänderungen abonniert hat, und
- Senden einer Benachrichtigung über eine Benutzerstandortänderung an die Schicht gemeinsam verwendeter Daten.

2. Entität nach Anspruch 1, die zu Folgendem ausgelegt ist:
- Senden einer Abonnementanforderung, die anzeigt, dass die bedienende Funkzugangsnetzwerkentität eine Benachrichtigung abonniert, wenn die Anwendungsentität eine Benachrichtigung über Benutzerstandortänderungen abonniert, an die Schicht gemeinsam verwendeter Daten.

3. Entität nach Anspruch 1 oder 2, wobei:
- die Benutzerstandortänderungen Zelländerungen beinhalten.

4. Verfahren zum Unterstützen einer Meldung einer Benutzerstandortänderung, das Folgendes umfasst:
- Unterstützen der gemeinsamen Verwendung von Daten via eine Datenbank, die als eine Schicht gemeinsam verwendeter Daten bezeichnet wird, durch eine Entität eines Mobilfunknetzwerks, die als eine bedienende Funkzugangsnetzwerkentität implementiert ist, mit mindestens einer weiteren Mobilfunknetzwerkentität, wobei die Datenbank, die als eine Schicht gemeinsam verwendeter Daten bezeichnet wird, Datenspeicherung und Zugang zu den gespeicherten Daten durch Netzwerkentitäten erlaubt, die die Schicht gemeinsam verwendeter Daten gemeinsam verwenden, wobei die Daten Daten beinhalten, die eine Meldung einer Benutzerstandortänderung betreffen, wobei die mindestens eine andere Mobilfunknetzwerkentität mindestens Folgendes beinhaltet: eine Entität, die als eine bedienende Kernnetzwerkentität bezeichnet wird, wie etwa eine Kernsteuerfunktion, und eine Entität, die als eine Anwendungsentität bezeichnet wird, wie etwa eine Richtliniensteuerung oder eine Anwendungsprogrammierschnittstellenexpositionsfunktion,
**gekennzeichnet durch**
- Empfangen einer Benachrichtigung durch die bedienende Funkzugangsnetzwerkentität von der Schicht gemeinsam verwendeter Daten, dass die Anwendungsentität eine Benachrichtigung über Benutzerstandortänderungen abonniert hat, und
- Senden einer Benachrichtigung über eine Benutzerstandortänderung durch die bedienende Funkzugangsnetzwerkentität an die Schicht gemeinsam verwendeter Daten.

5. Verfahren nach Anspruch 4, das Folgendes durch die bedienende Funkzugangsnetzwerkentität umfasst:
- Senden einer Abonnementanforderung, die anzeigt, dass die bedienende Funkzugangsnetzwerkentität eine Benachrichtigung abonniert, wenn die Anwendungsentität eine Benachrichtigung über Benutzerstandortänderungen abonniert, an die Schicht gemeinsam verwendeter Daten.

6. Verfahren nach Anspruch 4 oder 5, wobei:
- die Benutzerstandortänderungen Zelländerungen beinhalten.

## Revendications

1. Entité d'un réseau mobile mise en oeuvre en tant qu'entité de réseau d'accès radio de desserte, configurée pour :
- prendre en charge le partage de données avec au moins une autre entité de réseau mobile via une base de données appelée couche de données partagées, ladite base de données appelée couche de données partagées permettant le stockage de données et l'accès aux données stockées par les entités de réseau partageant ladite couche de données partagées, lesdites données comportant des données relatives à un rapport de changement d'emplacement d'utilisateur, ladite au moins une autre entité de réseau mobile comportant au moins : une entité appelée entité de réseau central de desserte, telle qu'une fonction de contrôle centrale, et une entité appelée entité d'application, telle qu'un contrôleur de politique ou qu'une fonction d'exposition d'interface de programmation d'application,
**caractérisée en ce que** ladite entité dudit réseau mobile est configurée pour
- recevoir, de la couche de données partagées, une notification selon laquelle l'entité d'application s'est abonnée pour être informée des changements d'emplacement d'utilisateur, et pour
- envoyer une notification sur le changement d'emplacement d'utilisateur à la couche de données partagées.

2. Entité selon la revendication 1, configurée pour :
- envoyer à la couche de données partagées une demande d'abonnement indiquant que l'entité de réseau d'accès radio de desserte s'est abonnée pour être informée si l'entité d'application s'est abonnée pour être informée des changements d'emplacement d'utilisateur.

3. Entité selon la revendication 1 ou 2, dans laquelle :
- lesdits changements d'emplacement d'utilisateur comportent des changements de cellule.

4. Procédé de prise en charge d'un rapport de changement d'emplacement d'utilisateur, comprenant :
- la prise en charge, par une entité d'un réseau mobile mise en oeuvre en tant qu'entité de réseau d'accès radio de desserte, du partage de données avec au moins une autre entité de réseau mobile via une base de données appelée couche de données partagées, ladite base de données appelée couche de données partagées permettant le stockage de données et l'accès aux données stockées par les entités de réseau partageant ladite couche de données partagées, lesdites données comportant des données relatives à un rapport de changement d'emplacement d'utilisateur, ladite au moins une autre entité de réseau mobile comportant au moins : une entité appelée entité de réseau central de desserte, telle qu'une fonction de contrôle centrale, et une entité appelée entité d'application, telle qu'un contrôleur de politique ou qu'une fonction d'exposition d'interface de programmation d'application,
**caractérisé par**
- la réception, par ladite entité de réseau d'accès radio de desserte, de la couche de données partagées, d'une notification selon laquelle l'entité d'application s'est abonnée pour être informée des changements d'emplacement d'utilisateur, et
- l'envoi, par ladite entité de réseau d'accès radio de desserte, d'une notification sur le changement d'emplacement d'utilisateur à la couche de données partagées.

5. Procédé selon la revendication 4, comprenant ladite entité de réseau d'accès radio de desserte :
- envoyant à la couche de données partagées une demande d'abonnement indiquant que l'entité de réseau d'accès radio de desserte s'est abonnée pour être informée si l'entité d'application s'est abonnée pour être informée des changements d'emplacement d'utilisateur.

6. Procédé selon la revendication 4 ou 5, dans lequel :
- lesdits changements d'emplacement d'utilisateur comportent des changements de cellule.
